# EUROPÄISCHE PATENTSCHRIFT

(11) **EP 2 230 438 B1**
(45) Veröffentlichungstag und Bekanntmachung des Hinweises auf die Patenterteilung: **11.05.2016**
(21) Anmeldenummer: 10153912.0
(22) Anmeldetag: 18.02.2010
(51) Int. Cl.: F16P 1/02

(54) **Anpassbarer Berührschutz**
Adjustable contact protection
Protection adaptable contre le contact

(30) Priorität: 16.03.2009 AT 15309 U
(43) Veröffentlichungstag der Anmeldung: 22.09.2010
(73) Patentinhaber: AVL List GmbH, 8020 Graz (AT)
(72) Erfinder: Polame, Jaroslav, 75002 Prerov (CZ); Kienzl, DI Franz, 8020 Graz (AT); Wetzel, Martin, 8010 Graz (AT)
(74) Vertreter: Patentanwälte Pinter & Weiss OG

(56) Entgegenhaltungen:
- WO-A1-02/33306
- CA-A1- 2 312 473
- FR-A1- 2 757 247
- GB-A- 1 151 020
- US-A1- 2003 216 187

## Beschreibung

Die Erfindung betrifft einen anpassbaren Berührschutz für eine Welle, mit einem mehrteiligen Mittelteil, wobei die Einzelteile des Mittelteils lösbar voneinander angeordnet sind und die Einzelteile im bestimmungsgemäßen Einsatz zu einem in Umfangsrichtung geschlossenen Kasten angeordnet sind und an zumindest einem axialen Ende eines Einzelteils ein austauschbarer Erweiterungsteil befestigt ist, der den Einzelteil in axialer Richtung erweitert.

In Prüfstandsumgebungen wird ein Prüfling, wie z.B. ein Verbrennungsmotor oder ein Antriebsstrang, von einer Belastungsmaschine (Dyno) entweder angetrieben oder belastet. Die Belastungsmaschine ist dabei in der Regel ein Elektromotor. Der Prüfling und die Belastungsmaschine werden über eine Antriebswelle und Wellenflansche miteinander gekoppelt. Als Antriebswellen kommen auch häufig Gelenkwellen zum Einsatz, um kleinere Lageungenauigkeiten auszugleichen. In einer solchen Prüfstandsumgebung arbeiten auch Prüfstandspersonal oder Testingenieure, weshalb es aus Sicherheitsgründen notwendig ist, die rotierende Antriebswelle durch einen Berührschutz abzudecken. Oftmals wird für solche Abdeckungen auch der Begriff Wellenschutz verwendet. Der Berührschutz kann auch zum Schutz der Messtechnik vor Kontakt mit der rotierenden Welle verwendet werden. In einem Prüfstand kommen darüber hinaus eine Vielzahl von Belastungsmaschinen, Prüflingen und Antriebswellen Kombinationen zum Einsatz. Jede einzelne Kombination bedarf einen darauf angepassten (unterschiedliche Antriebswellenlängen bzw. -durchmesser, unterschiedliche Flanschabmessungen, etc.) Berührschutz. Dies würde es erforderlich machen, eine Vielzahl von unterschiedlichen Berührschutze bereit zu stellen, was entsprechend aufwändig und teuer ist und auch ein logistisches Problem darstellt. Aus diesen Gründen ist es erstrebenswert, einen anpassbaren Berührschutz vorzusehen, der an die jeweiligen Prüfstandsgegebenheiten angepasst werden kann.

Die US 2006/0144201 A1 zeigt einen solchen anpassbaren Berührschutz, bei dem zwei Teile durch ein Scharnier miteinander verbunden sind und der Berührschutz einen Mittelabschnitt, an dem der Berührschutz an Stützbeinen befestigt ist, und zwei zylindrische Endabschnitte aufweist. An den zylindrischen Endabschnitten sind Schnittlinien vorgesehen, entlang die die zylindrischen Endabschnitte auf die benötigte axiale Länge abgelängt werden können. An den axialen Enden der zylindrischen Endabschnitte können pyramidenförmig abgestufte Abschlusskappen befestigt werden, die es durch Abtrennen an der richtigen Abstufung ermöglichen, den Berührschutz auf einen bestimmten Antriebswellendurchmesser anzupassen. Der Nachteil dieses Berührschutzes liegt darin, dass der Berührschutz durch mechanische Bearbeitung (Schneiden, Sägen, etc.) angepasst werden muss, was aufwendig ist und ein rasches Umrüsten des Prüfstandes unmöglich macht, und der so angepasste Berührschutz danach wiederum nur mehr bedingt einsetzbar ist, was die Flexibilität des Berührschutzes sehr einschränkt. Außerdem ist es durch einen solchen Berührschutz kaum sinnvoll möglich, einen Wellenflansch zu umfassen, da dazu der Berührschutz durchgehend mit einem großen Durchmesser ausgeführt werden müsste, was äußerst unwirtschaftlich wäre.

Ein ähnlicher Berührschutz ist aus der EP 1 099 901 A2 bekannt. Der Berührschutz ist dabei wiederum zweiteilig ausgeführt, wobei ein radial erweiterter Mittelteil vorgesehen ist, um eine Wellenverbindung umfassen zu können, an dem an beiden axialen Enden zylinderförmige Endabschnitte vorgesehen sind. Die zylinderförmigen Endabschnitte können wieder auf die benötigte Länge abgelängt werden. Der Berührschutz kann axial durch Endkappen, die in die zylinderförmigen Endabschnitte gesteckt und dort befestigt werden, abgeschlossen werden. Ein solcher Berührschutz hat aber im Wesentlichen dieselben Nachteile wie bereits oben erwähnt.

Beiden Berührschutzen ist es gemein, dass diese zwar an die jeweiligen Gegebenheiten angepasst werden können, aber danach nur mehr sehr bedingt wiederverwendet werden können. Eine modulare und wiederholbare Anpassbarkeit des Berührschutzes an unterschiedlichste Belastungsmaschinen und Prüflings und Antriebswellen Kombinationen ist dabei unmöglich.

Aus der US 4 130 998 A ist wiederum ein Berührschutz aus zwei teleskopartig ineinandergeschobenen Teilen bekannt, der somit einfach an unterschiedliche Längen von Antriebswellen anpassbar ist. Aber auch dieser Berührschutz muss auf den größten Durchmesser ausgelegt sein, was insbesondere bei Wellenflanschen mit großen Durchmessern dazu führt, dass der Berührschutz rasch sehr groß und unwirtschaftlich wird. Vor allem die Größe kann in einer Prüfstandsumgebung, in der ohnehin häufig Platzmangel herrscht, ein Problem sein.

Die US 2003/216187 A1 zeigt einen Berührschutz mit voneinander lösbaren Einzelteilen. Zur Anpassung an die Wellenlänge können seitliche Hülsen entlang vorgegebener Schnittlinien gekürzt werden. Ist es aufgrund der baulichen Gegebenheiten oder der Überlänge der zu verdeckenden Welle, nicht möglich dass die Endflächen der seitlichen Hülsen bündig mit den angrenzenden, nicht rotierenden Bauteilen abschließen, können die Öffnungen der Hülsen mit entsprechenden Abschlusskappen die eine Welleneröffnung aufweisen, verschlossen werden. Eine Sicherheitseinrichtung für den Fall eines Wellenbruchs ist nicht vorgesehen.

Es ist daher eine Aufgabe der Erfindung einen kompakten Berührschutz anzugeben, der ein sicheres Einfangen der Welle im Falle eines Wellenbruchs erlaubt.

Diese Aufgabe wird erfindungsgemäß dadurch gelöst, dass im bestimmungsgemäßen Einsatz, an beiden axialen Enden eines Einzelteils jeweils ein austauschbarer Erweiterungsteil angeordnet ist, der den jeweiligen Einzelteil in axialer Richtung erweitert und, wobei an den Einzelteilen des Mittelteils jeweils ein Teil einer sich radial nach innen erstreckenden Schutzbarriere angeordnet ist, welche im bestimmungsgemäßen Einsatz der Einzelteile einen kreisförmigen Durchgang für die Welle bilden und im Falle eines Wellenbruches die beiden Teile der Welle einfangen.

Damit ist es möglich, den Mittelteil durch die Erweiterungsteile, die eine nahezu beliebige Form aufweisen können, modular anzupassen. Auf geänderte Gegebenheiten kann einfach reagiert werden, indem die Erweiterungsteile ausgetauscht werden. Die Erweiterungsteile sind dabei auch wieder verwendbar und können rasch ausgetauscht werden, was ein rasches Umrüsten ermöglicht.

Ein konstruktiv besonders einfacher Berührschutz, der einfach zu bedienen ist ergibt sich, wenn der Mittelteil zweiteilig ausgeführt ist und die beiden Einzelteile mittels Scharnier miteinander verbunden sind, sodass die Einzelteile aufklappbar sind.

Die Flexibilität des Einsatzes des Berührschutzes wird erhöht, wenn ein Einzelteil an einem ortsfesten Stützteil befestigt ist und zumindest ein anderes Einzelteil relativ zum befestigten Einzelteil bewegbar angeordnet ist und/oder ein Erweiterungsteil in axialer Richtung relativ zum zugehörigen Einzelteil bewegbar angeordnet ist. Damit lassen sich auch Feineinstellungen des Berührschutzes sehr einfach vornehmen.

Um auch Teile mit großem Umfang, wie z.B. Flansche oder Kupplungsscheiben, einfach und platzsparend mit dem Berührschutz umgreifen zu können, ist vorteilhafter Weise vorgesehen, den Erweiterungsteil mit einer radialen Aufweitung auszuführen.

Die Sicherheit wird weiter erhöht, wenn am Berührschutz ein Schutzschalter angeordnet ist, der bei geschlossenem Berührschutz anspricht. Mit einem solchen Schutzschalter kann ein Prüfstandsbetrieb nur dann freigegeben werden, wenn der Berührschutz ordnungsgemäß geschlossen wurde.

Die gegenständliche Erfindung wird nachfolgend anhand der schematischen, beispielhaften, nicht einschränkenden und vorteilhafte Ausgestaltungen zeigenden Figuren 1 bis 9 beschrieben. Dabei zeigt
Fig. 1 einen erfindungsgemäßen Berührschutz in offener Stellung,
Figs. 2 bis 5 Details der Teile eines erfindungsgemäßen Berührschutzes,
Figs. 6 bis 8 verschiedene Ausgestaltungen eines erfindungsgemäßen Berührschutzes und
Fig. 9 den Einsatz eines erfindungsgemäßen Berührschutzes in einem Prüfstand.

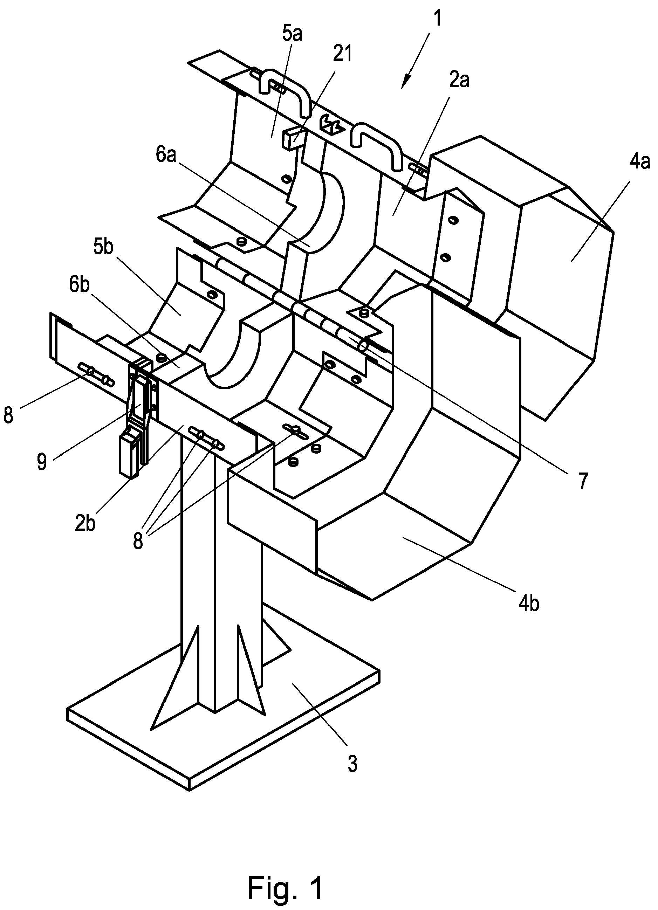

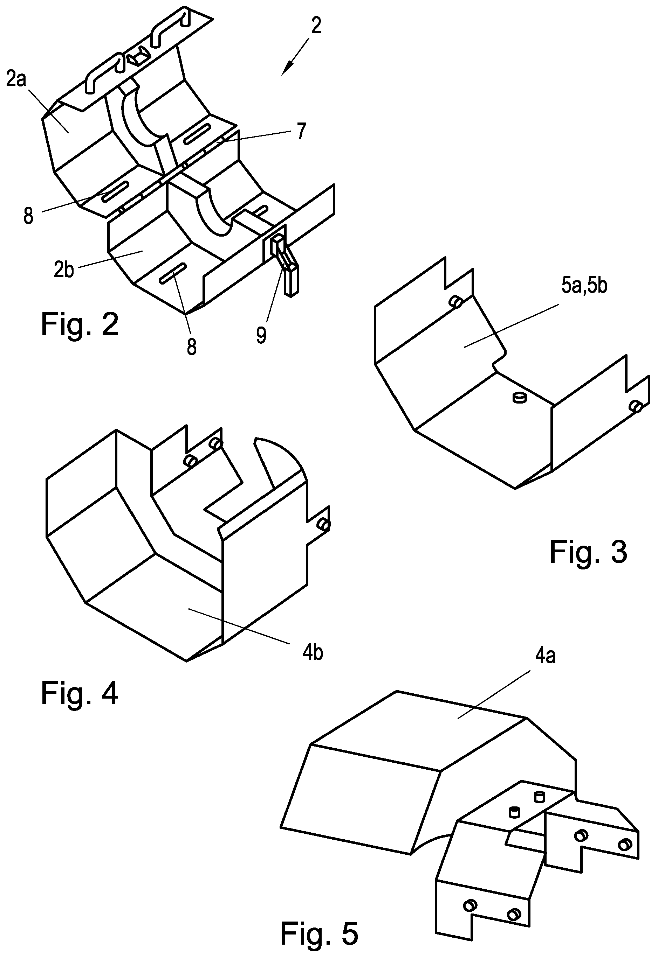

Der erfindungsgemäße Berührschutz 1 umfasst gemäß Fig. 1 einen Mittelteil 2, der hier aus zwei Einzelteilen 2a und 2b gebildet wird, die über ein Scharnier 7 miteinander verbunden sind (siehe auch Fig. 2). Selbstverständlich ist es auch denkbar, mehr als zwei Einzelteile vorzusehen. Die Einzelteile 2a, 2b können somit um die durch das Scharnier 7 gebildete Drehachse aufgeklappt werden. Die Einzelteile 2a, 2b könnten aber auch anders lösbar angeordnet sein, z.B. könnte der obere Einzelteil 2b vom unteren Einzelteil 2a abhebbar sein.

Im betriebsgemäßen Einsatz sind die Einzelteile 2a, 2b zusammengeklappt und bilden einen an seinen axialen Enden offenen und in Umfangsrichtung im Wesentlichen geschlossenen Kasten, in dem eine Antriebswelle angeordnet werden kann. Die Einzelteile 2a, 2b können dabei durch einen Verschluss 9, hier z.B. ein hebelförmiger Schnellverschluss, zusammengehalten werden. Weiters kann der Berührschutz mit einem Schutzschalter ausgestattet sein, der den Prüfstandsbetrieb aus Sicherheitsgründen erst freigibt, wenn der Kontakt geschlossen ist, womit die korrekte Schließung des Berührschutzes gewährleistet werden kann. Der Mittelteil 2 kann auf einer Stützeinrichtung 3, hier z.B. ein Stützfuß, angeordnet sein. Dazu kann der untere Einzelteil 2b an der Stützeinrichtung 3 befestigt werden, z.B. über Langlöcher im Einzelteil 2b, durch die der Einzelteil 2b mit der Stützeinrichtung verschraubt werden kann. Der untere Einzelteil 2b ist somit ortsfest und der obere Einzelteil 2a beweglich angeordnet. Die Stützeinrichtung 3 kann natürlich auch höhenverstellbar ausgeführt sein.

An den Einzelteilen 2a, 2b sind sich radial nach innen erstreckende Schutzbarrieren 6a, 6b angeordnet, die einen kreisförmigen Durchgang für die Antriebswelle ausbilden und die die Antriebswelle im betriebsgemäßen Einsatz mit wenig Spiel umfassen. Die Schutzbarriere 6 dient dabei im Wesentlichen dazu, die Folgen bei einem möglichen Wellenbruch so gering wie möglich zu halten, indem die Antriebswelle durch die Schutzbarriere 6 so schnell wie möglich eingefangen wird.

An den axialen Enden der Einzelteile 2a, 2b sind jeweils austauschbare Erweiterungsteile 4a, 4b, 5a, 5b angeordnet, die den Mitteilteil 2 in axialer Richtung erweitern. Die Erweiterungsteile 4a, 4b, 5a, 5b können beliebig geformt sein, um sich den jeweiligen Gegebenheiten der Antriebswelle anzupassen. Zum Befestigen der Erweiterungsteile 4, 5 am Mitteilteil 2 sind in den Einzelteilen 2a, 2b z.B. Langlöcher 8 vorgesehen, durch die die Erweiterungsteile 4, 5 mit den Einzelteilen 2a, 2b verschraubt werden können. Die Langlöcher 8 ermöglichen weiters eine axiale Justierung der Erweiterungsteile 4, 5 innerhalb gewisser durch die Langlöcher 8 vorgegebenen Grenzen.

Durch diese Erweiterungsteile 4a, 4b, 5a, 5b ist der Berührschutz 1 nahezu beliebig modular anpassbar. Mögliche Ausgestaltungen der Erweiterungsteile 4, 5 sind in den Figs. 3 bis 5 dargestellt. In der einfachsten Ausgestaltung nach Fig. 3 ist der Erweiterungsteil 5a, 5b nur zur axialen Erweiterung des Mitteilteils 2 gedacht. Dazu können mehrere solche Erweiterungsteile 5a, 5b mit verschiedenen axialen Längen zur Verfügung gestellt werden. Ein solcher Erweiterungsteil 5a, 5b passt sowohl auf das linke, als auch auf das rechte axiale Ende des oberen und unteren Einzelteiles 2a, 2b. In den Fig. 4 und 5 ist ein Erweiterungsteil 4a, 4b dargestellt, der auch eine radiale Aufweitung aufweist. Damit kann z.B. auch eine Flanschscheibe oder eine Wellenkupplung mit großem Durchmesser vom Berührschutz 1 umfasst werden. Ein solcher Erweiterungsteil 4 muss in gespiegelter Form vorliegen, um links und rechts eingesetzt werden zu können.

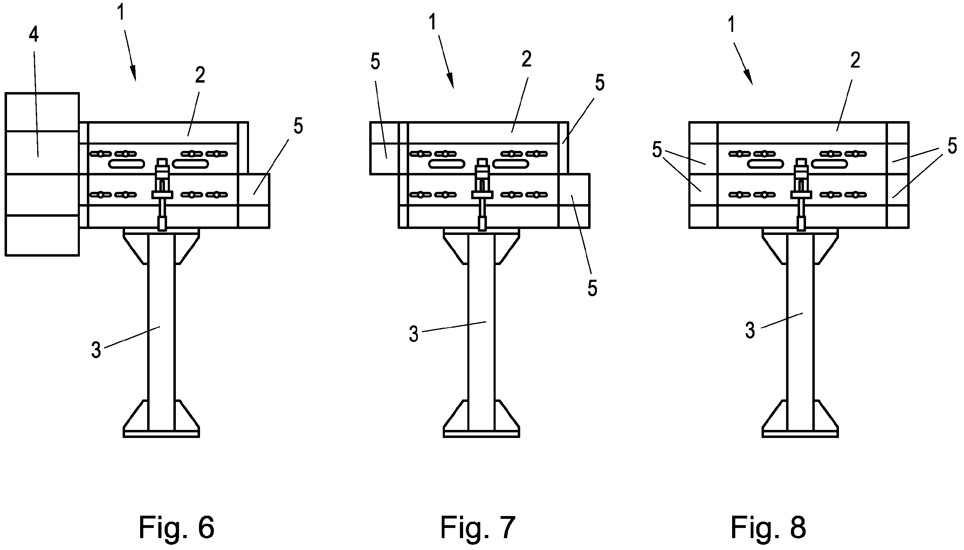

Mögliche Ausgestaltungen des Berührschutzes 1 mit Mittelteil 2 und Erweiterungsteilen 4, 5 sind in den Fig. 6 bis 8 dargestellt. Es ist aber selbstverständlich, dass es noch viele weitere, anders gestaltete Erweiterungsteile, als die dargestellten, und viele weitere Kombinationen von Erweiterungsteilen mit dem Mittelteil 2 gibt.

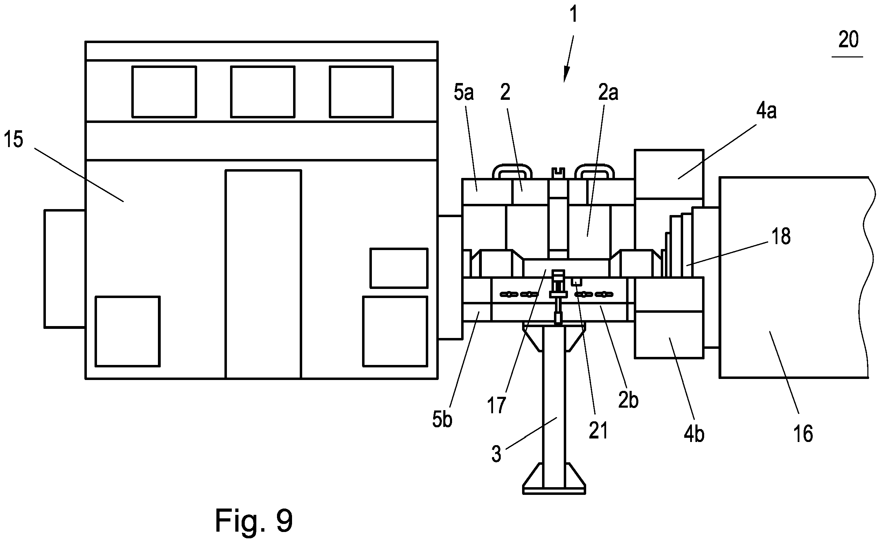

Die Fig. 9 zeigt den Berührschutz 1 (in offener Stellung gezeigt) in Verwendung in einem Prüfstand 20 mit einer Belastungsmaschine 15 (z.B. ein Elektromotor) und einem Prüfling 16, wie z.B. ein Verbrennungsmotor oder ein Antriebsstrang. Die Belastungsmaschine 15 und der Prüfling 16 sind durch eine Antriebswelle 17, hier eine Gelenkwelle, gekoppelt. Auf Prüflingsseite ist ein Wellenflansch 18 bzw. eine Kupplungsscheibe zur Verbindung der Antriebswelle 17 mit dem Prüfling 16 vorgesehen. Die Antriebswelle 17 wird im Betrieb durch den Berührschutz 1 abgedeckt, wofür der obere Einzelteil 2a heruntergeklappt wird. Dabei wird ein Schutzschalter 21 geschlossen, der den Prüfstandsbetrieb freigibt. Der Schutzschalter 21 kann natürlich auch an anderer Stelle angeordnet sein. Wesentlich ist dabei nur, dass der Schutzschalter 21 anspricht, wenn der Berührschutz geschlossen ist.

Auf Prüflingsseite ist ein radial aufgeweiteter Erweiterungsteil 4a, 4b vorgesehen, um den Flansch 18 bzw. die Kupplungsscheibe zu umfassen, und belastungsmaschinenseitig ist ein einfacher axialer Erweiterungsteil 5a, 5b vorgesehen. Falls eine andere Antriebswelle 17 eingesetzt werden muss, z.B. wenn der Prüfling 16 oder die Belastungsmaschine 15 gewechselt wird, wird der obere Einzelteil 2a aufgeklappt, womit die Antriebswelle 17 zugänglich ist. Falls die neue Antriebswelle 17 neue Erweiterungsteile 4, 5 benötigt, können diese bei entfernter Antriebswelle 17 einfach ausgewechselt werden. Alternativ könnte auch der gesamte Berührschutz 1 (mit Mittelteil 2 und Erweiterungsteilen 4, 5) an der Stützeinrichtung 3 gegen einen bereits vorbereiteten anderen Berührschutz 1 ausgetauscht werden.

## Patentansprüche

1. Anpassbarer Berührschutz für eine Welle, mit einem mehrteiligen Mittelteil (2), wobei die Einzelteile (2a, 2b) des Mittelteils (2) lösbar voneinander angeordnet sind und die Einzelteile (2a, 2b) im bestimmungsgemäßen Einsatz zu einem in Umfangsrichtung geschlossenen Kasten angeordnet sind, **dadurch gekennzeichnet, dass** an beiden axialen Enden eines Einzelteils (2a, 2b) jeweils ein austauschbarer Erweiterungsteil (4a, 4b, 5a, 5b) befestigt ist, der den Einzelteil (2a, 2b) in axialer
Richtung erweitert, wobei an den Einzelteilen (2a, 2b) des Mittelteils (2) jeweils ein Teil (6a, 6b) einer sich radial nach innen erstreckenden Schutzbarriere (6)
angeordnet ist, welche im bestimmungsgemäßen Einsatz der Einzelteile (2a, 2b) einen kreisförmigen Durchgang für die Welle bilden und im Falle eines Wellenbruches die beiden Teile (6a, 6b) die Welle einfangen.

2. Anpassbarer Berührschutz nach Anspruch 1, **dadurch gekennzeichnet, dass** an jedem Einzelteil (2a, 2b) ein austauschbarer Erweiterungsteil (4a, 4b, 5a, 5b) befestigt ist, die die Einzelteile (2a, 2b) in axialer Richtung erweitern.

3. Anpassbarer Berührschutz nach einem der Ansprüche 1 oder 2, **dadurch gekennzeichnet, dass** der Mittelteil (2) zweiteilig ausgeführt ist und die beiden Einzelteile (2a, 2b) mittels Scharnier (7) miteinander verbunden sind, sodass die Einzelteile (2a, 2b) aufklappbar sind.

4. Anpassbarer Berührschutz nach einem der Ansprüche 1 bis 3, **dadurch gekennzeichnet, dass** ein Einzelteil (2b) an einer ortsfesten Stützeinrichtung (3) befestigt ist und zumindest ein anderes Einzelteil (2a) relativ zum befestigten Einzelteil (2b) bewegbar angeordnet ist.

5. Anpassbarer Berührschutz nach einem der Ansprüche 1 bis 4, **dadurch gekennzeichnet, dass** ein Erweiterungsteil (4a, 4b, 5a, 5b) in axialer Richtung relativ zum zugehörigen Einzelteil (2a, 2b) bewegbar angeordnet ist.

6. Anpassbarer Berührschutz nach einem der Ansprüche 1 bis 5, **dadurch gekennzeichnet, dass** ein Erweiterungsteil (4a, 4b) mit einer radialen Aufweitung ausgeführt ist.

7. Anpassbarer Berührschutz nach einem der Ansprüche 1 bis 6, **dadurch gekennzeichnet, dass** am Berührschutz (1) ein Schutzschalter (21) angeordnet ist, der bei geschlossenem Berührschutz (1) anspricht.

8. Prüfstand mit einer Belastungsmaschine (15) und einem Prüfling (16), der mittels einer Antriebswelle (17) mit der Belastungsmaschine (15) verbunden ist, wobei die Antriebswelle (17) zumindest teilweise von einem Berührschutz (1) nach einem der Ansprüche 1 bis 7 umgeben ist.

## Claims

1. An adjustable contact protection for a shaft with a multi-part central part (2), wherein the individual parts (2a, 2b) of the central part (2) are arranged so as to be releasable from one another and the individual parts (2a, 2b), when used as intended, are arranged to form a box which is closed in the circumferential direction, **characterized in that** a replaceable extension part (4a, 4b, 5a, 5b) which extends the individual part (2a, 2b) in the axial direction is fastened to both axial ends of an individual part (2a, 2b), wherein a part (6a, 6b) of a radially inwardly extending protective barrier (6) is disposed on each of the individual parts (2a, 2b) of the central part (2) and said parts (6a, 6b), when the individual parts (2a, 2b) are used as intended, form a circular passage for the shaft, and in the event of breakage of the shaft the two parts (6a, 6b) trap the shaft.

2. The adjustable contact protection according to claim 1, **characterized in that** a replaceable extension part (4a, 4b, 5a, 5b), which extends the individual parts (2a, 2b) in the axial direction, is fastened to each individual part (2a, 2b).

3. The adjustable contact protection according to one of claims 1 or 2, **characterized in that** the central part (2) is designed in two parts and the two individual parts (2a, 2b) are connected by means of a hinge (7) so that the individual parts (2a, 2b) can be flipped open.

4. The adjustable contact protection according to one of claims 1 to 3, **characterized in that** an individual part (2b) is fastened on a stationary supporting device (3) and at least one other individual part (2a) is arranged so as to be movable relative to the fastened individual part (2b).

5. The adjustable contact protection according to one of claims 1 to 4, **characterized in that** an extension part (4a, 4b, 5a, 5b) is arranged so as to be movable in the axial direction relative to the associated individual part (2a, 2b).

6. The adjustable contact protection according to one of claims 1 to 5, **characterized in that** an extension part (4a, 4b) is designed with a radial widening.

7. The adjustable contact protection according to one of claims 1 to 6, **characterized in that** a protective switch (21) which reacts when the contact protection (1) is closed is arranged on the contact protection (1).

8. Test bench with a dynamometer (15) and a unit under test (16) which is connected to the dynamometer (15) by means of a drive shaft (17), wherein the drive shaft (17) is at least partially surrounded by a contact protection (1) according to one of claims 1 to 7.

## Revendications

1. Dispositif anti-contact adaptable destiné à un arbre, qui comprend un élément central (2) constitué de plusieurs éléments, les éléments individuels (2a, 2b) de l'élément central (2) étant disposés de façon détachables les uns des autres, et les éléments individuels (2a, 2b) étant disposés dans l'utilisation prévue de façon à former une boîte fermée dans la direction périphérique, **caractérisé en ce qu'**un élément d'extension remplaçable (4a, 4b, 5a, 5b) est fixé aux deux extrémités axiales de chaque élément individuel (2a, 2b), lequel élément d'extension étend l'élément individuel (2a, 2b) dans la direction axiale, un élément (6a, 6b) d'une barrière de protection (6) qui s'étend radialement vers l'intérieur étant disposé au niveau de chacun des éléments individuels (2a, 2b) de l'élément central (2), lesquels éléments (6a, 6b) forment dans l'utilisation prévue des éléments individuels (2a, 2b) un passage de forme circulaire destiné à l'arbre et, en cas de rupture de l'arbre, les deux éléments (6a, 6b) capturent l'arbre.

2. Dispositif anti-contact adaptable selon la revendication 1, **caractérisé en ce qu'**un élément d'extension remplaçable (4a, 4b, 5a, 5b) est fixée au niveau de chaque élément (2a, 2b), lesquels éléments d'extension étendent les éléments individuels (2a, 2b) dans la direction axiale.

3. Dispositif anti-contact adaptable selon l'une des revendications 1 ou 2, **caractérisé en ce que** l'élément central (2) est constitué de deux éléments et les deux éléments individuels (2a, 2b) sont reliés entre eux au moyen d'une charnière (7) de sorte que les éléments individuels (2a, 2b) peuvent être repliés.

4. Dispositif anti-contact adaptable selon l'une des revendications 1 à 3, **caractérisé en ce qu'**un élément individuel (2b) est fixé à un moyen de support fixe (3) et au moins un autre élément individuel (2a) est disposé de façon à être mobile par rapport à l'élément fixe (2b).

5. Dispositif anti-contact adaptable selon l'une des revendications 1 à 4, **caractérisé en ce qu'**un élément d'extension (4a, 4b, 5a, 5b) est dispositif de façon à être mobile dans la direction axiale par rapport à l'élément individuel (2a, 2b) associé.

6. Dispositif anti-contact adaptable selon l'une des revendications 1 à 5, **caractérisé en ce qu'**un élément d'extension (4a, 4b) est réalisé de façon à s'étendre radialement.

7. Dispositif anti-contact adaptable selon l'une des revendications 1 à 6, **caractérisé en ce qu'**un disjoncteur (21) est disposé au niveau du dispositif anti-contact, lequel disjoncteur se déclenche lorsque le dispositif anti-contact (1) est fermé.

8. Banc d'essai pourvu d'une machine de contrainte (15) et d'un échantillon (16) qui est relié par le biais d'un arbre d'entraînement (17) à la machine de contrainte (15), l'arbre d'entraînement (17) étant entouré au moins en partie dispositif anti-contact (1) selon l'une des revendications 1 à 7.
